# EUROPÄISCHE PATENTANMELDUNG

(11) **EP 3 989 317 A1**
(43) Veröffentlichungstag der Anmeldung: **27.04.2022**
(21) Anmeldenummer: 21195766.7
(22) Anmeldetag: 09.09.2021
(51) Int. Cl.: H01M 8/04111, H01M 8/04119, H01M 8/04082, H01M 8/04291, H01M 8/04828, H01M 8/10

(54) **LUFTLAGERUNG VON BEFEUCHTERN FÜR BRENNSTOFFZELLEN EINES FAHRZEUGS**

(30) Priorität: 30.09.2020 DE 102020212386
(71) Anmelder: Siemens Mobility GmbH, 81739 München (DE)
(72) Erfinder: Antrack, Markus, 01589 Riesa (DE)

(57) **Zusammenfassung**

Die Erfindung betrifft ein Fahrzeug (1) mit wenigstens einem Brennstoffzellensystem (2), umfassend wenigstens eine Brennstoffzelle (3) und wenigstens einen Befeuchter (4), wobei zumindest der wenigstens eine Befeuchter (4) über ein Luftlager (5) mit dem Fahrzeug (1) verbunden ist. Betrieben wird das wenigstens eine Luftlager (5) indem zur Versorgung des Luftlagers (5) Druckluft aus einem Hauptdruckluftsystems des Fahrzeugs oder aus einem Prozessluftsystem des Brennstoffzellensystems (2) genutzt wird.

## Beschreibung

Die Erfindung betrifft ein Fahrzeug mit wenigstens einem Brennstoffzellensystem, umfassend wenigstens eine Brennstoffzelle und wenigstens einen Befeuchter, sowie ein Verfahren zum Betreiben des Fahrzeugs.

Fahrzeuge mit elektrischem Antrieb und einer Versorgung des elektrischen Antriebs mit Energie aus einem Brennstoffzellensystem sind bekannt.

Auch Brennstoffzellen mit Polymer-Elektrolyt-Membranen (PEM) sind bekannt geworden. Die PEM-Technik bietet aufgrund ihrer niedrigen Betriebstemperatur (< 100 °C) vielseitige Anwendungsmöglichkeiten, sodass sie sowohl in kleinen als auch in großen Leistungsbereichen verwendet werden kann. In größeren PEM-Zellen, die stärkere Ströme transportieren, erfordert die Polymermembran eine Befeuchtung des Reaktanten, um zu vermeiden, dass er unter Belastung dehydriert. Die Kapazität zum Protonenaustausch ist direkt proportional zur Feuchte des Polymers. Ein trockenes Polymer schränkt die Leitfähigkeit der Membran ein und verursacht Verluste in der Zelle. Daher können Befeuchter eingesetzt werden.

So lehrt beispielsweise die Offenlegungsschrift WO 2016 / 188 851 A1 ein Unterseeboot mit einer Brennstoffzellenvorrichtung umfassend wenigstens einen Befeuchter. Auch die DE 10 2009 034 380 A1 offenbart ein Fahrzeug mit einem Brennstoffzellensystem, umfassend wenigstens eine Brennstoffzelle und wenigstens einen Befeuchter gemäß dem Oberbegriff des unabhängigen Patentanspruchs 1.

Die DE 112013002 776 T5, DE 10 2017 211 962 A1, DE 10 2010 023 671 A1, DE 10 2015 224 202 A1 und DE 10 2018 220 739 A1 zeigen weitere Brennstoffzellensysteme. Die Druckschrift DE 199 18 564 A1 betrifft ein aerostatisches Luftlager.

Die Befeuchter umfassen eine Membran, beispielsweise in einem Spritzgussgehäuse, deren Poren durch Hohlfasern gebildet werden. Die Poren der Membran können durch kleine Partikel verschlossen werden, was die Leistungsfähigkeit des Befeuchters limitiert. Auch die Fasern der Membran können durch mechanischen Belastungen, insbesondere durch Stöße, brechen, was wiederum zu einem Leistungsabfall und letztendlich zum Austausch der Befeuchter führt.

Durch kurze und feste Tauschintervalle der Befeuchter, fallen in der Instandhaltung des Brennstoffzellensystems jedoch hohe Kosten an.

Der Erfindung liegt die Aufgabe zugrunde, die Lebensdauer des Brennstoffzellensystems zu verlängern und somit Instandhaltungskosten zu verringern.

Gelöst wird die Aufgabe durch die Gegenstände der unabhängigen Patentansprüche 1 und 12. Weiterbildungen und Ausgestaltungen der Erfindung finden sich in den Merkmalen der abhängigen Patentansprüche wieder.

Ein erfindungsgemäßes Fahrzeug umfasst wenigstens ein Brennstoffzellensystem mit wenigstens einer Brennstoffzelle und wenigstens einem Befeuchter, wobei zumindest der wenigstens eine Befeuchter über ein Luftlager mit dem Fahrzeug verbunden ist.

Bei dem Fahrzeug, beispielsweise ein Land-, Wasser- oder Luftfahrzeug, handelt es sich insbesondere um ein großräumiges Fahrzeug, insbesondere des Personenverkehrs, insbesondere ein Schienenfahrzeug. Das Brennstoffzellensystem inklusive des wenigstens einen Befeuchters kann vorteilhaft im Dachbereich, beispielsweise auf dem Dach eines Wagenkastens eines Schienenfahrzeugs, oder unterflur angeordnet sein.

Das Fahrzeug ist weitergebildet elektrisch angetrieben. Das Brennstoffzellensystem ist dann entsprechend zur Versorgung des elektrischen Antriebs des Fahrzeugs mit Energie ausgebildet. Es handelt sich dann um ein brennstoffzellenbetriebenes Fahrzeug.

Bei der wenigstens einen Brennstoffzelle des Brennstoffzellensystems handelt es sich insbesondere um eine Brennstoffzelle mit einer Polymer-Elektrolyt-Membran (PEM). Das Brennstoffzellensystem umfasst daher weitergebildet wenigstens eine Brennstoffzelle mit einer Polymer-Elektrolyt-Membran (PEM).

Der wenigstens eine Befeuchter ist dann entsprechend zur Befeuchtung der Polymer-Elektrolyt-Membran der Brennstoffzelle geeignet ausgebildet. Der wenigstens eine Befeuchter kann grundsätzlich der Befeuchtung der Edukte der Brennstoffzelle, insbesondere auf einer Anodenseite der Brennstoffzelle, dienen.

Der wenigstens eine Befeuchter weist gemäß einer weiteren Weiterbildung eine Faser-, insbesondere eine Hohlfasermembran, auf.

Die Fasermembran kann Teil einer austauschbaren Membrankartusche sein. Eine Membrankartusche beschreibt allgemein einen austauschbaren Behälter für Membranmaterial. Entsprechend kann der wenigstens eine Befeuchter eine austauschbare Membrankartusche umfassend die Fasermembran aufweisen.

Eine weitere Weiterbildung der erfindungsgemäßen Lösung sieht vor, dass die Fasermembran des wenigstens einen Befeuchters in einem Gehäuse des Befeuchters elastisch gelagert ist. Die Fasermembran kann dabei insbesondere über wenigstens ein Elastomerlager elastisch mit dem Gehäuse des Befeuchters verbunden sein. Weist der Befeuchter die oben angeführte, austauschbare Membrankartusche umfassend die Fasermembran auf, ist entsprechend die austauschbare Membrankartusche elastisch in dem Gehäuse des Befeuchters angeordnet, beispielsweise mittels Elastomerlagerung.

Das Fahrzeug, insbesondere das Brennstoffzellensystem, umfasst wenigstens ein Luftlager, insbesondere ein aerostatisches Lager, über welches zumindest der wenigstens eine Befeuchter unmittelbar oder mittelbar mit dem Fahrzeug verbunden ist, insbesondere auf welchem zumindest der wenigstens eine Befeuchter gelagert ist.

Beispielsweise ist ein Gehäuse des wenigstens einen Befeuchters über das wenigstens eine Luftlager unmittelbar mit einem Wagenkasten, beispielsweise einem Dach, des Fahrzeugs verbunden. Es ist aber auch möglich, dass ein Container, welcher den wenigstens einen Befeuchter oder das Brennstoffzellensystem mit Brennstoffzelle und Befeuchter umgibt, fest auf dem Dach des Fahrzeugs angeordnet ist, und zumindest der wenigstens eine Befeuchter im Container luftgelagert ist, und somit mittelbar über das Luftlager und den Container am Fahrzeug angeordnet ist. Es ist auch möglich, dass das gesamte Brennstoffzellensystem, beispielsweise in einem Container auf dem Fahrzeugdach angeordnet, auf einem oder mehreren Luftlagern mit dem Fahrzeug verbunden ist. So kann auch der Container über eine Luftlagerung mit dem Fahrzeug verbunden sein.

Wichtig ist die elastische Lagerung des Befeuchters mit dämpfenden Eigenschaften, um eine Degeneration des Befeuchters durch Vibrationen oder Stöße zu verhindern.

Gemäß einer weiteren Weiterbildung umfasst das Brennstoffzellensystem mehrere Befeuchter, die einzeln über Luftlager mit dem Fahrzeug verbunden sind. Die mehreren Befeuchter sind dann jeweils einzeln gelagert, d.h. jeder Befeuchter ist über ein separates, nur diesem Befeuchter zugeordnetes Luftlager mit dem Fahrzeug verbunden.

Das Luftlager ist weitergebildet ein aerostatisches Lager, bei dem Druckluft zum Aufbau eines Luftdruckpolsters in einen Lagerspalt zwischen zueinander bewegbaren Lagerflächen eingeleitet wird.

Vorteilhaft ist ein konventionelles Düsenluftlager, welches vorgegebene Einströmdüsen aufweist, durch welche die Druckluft in den Lagerspalt strömt. Die Einströmdüsen sind dann in Anzahl und Größe, insbesondere Durchmesser, vorgegeben und über die Lagefläche vorgegeben verteilt. Durch die vorgegebene Anzahl, Größe und Verteilung kann eine ausreichende Schwingungsdämpfung gewährleistet werden. Die Vorgaben können zumindest auf Größe und Gewicht des luftgelagerten wenigstens einen Befeuchters abgestimmt sein. Auch können die Vorgaben in Abhängigkeit von erwartenden Schwingungen während der Fahrt des Fahrzeugs, die ihrerseits wiederum von der Strecke und der Geschwindigkeit des Fahrzeugs abhängen, gemacht werden.

Das Luftlager wirkt als, insbesondere frequenzunabhängig arbeitender, Schwingungsdämpfer zur Dämpfung von mechanischen Schwingungen (Vibrationen, Erschütterungen, Stößen), die während der Fahrt des Fahrzeugs auftreten können.

Das Luftlager bietet hinsichtlich seiner Eigenschaften Vorteile gegenüber konventionellen Schwingungsdämpfern, beispielsweise Feder-/Dämpfer-Elementen aus mechanischer Feder und hydraulischem Stoßdämpfer, Elastomerlagern oder auch Luftkissenlagerungen.

Zur Versorgung des Luftlagers mit Druckluft kann das Fahrzeug wenigstens einen Druckluftkompressor eines Hauptdruckluftsystems zur Versorgung von druckluftbetriebenen, vom Brennstoffzellensystem unabhängigen, weiteren Komponenten des Fahrzeugs mit Druckluft, beispielsweise zum Betrieb von Druckluftbremsen des Fahrzeugs, insbesondere des Schienenfahrzeugs, aufweisen, welcher mit dem Luftlager, insbesondere über geeignete Druckluftleitungen, beispielsweise flexible Rohrverbindungen, verbunden ist. Ein Druckluftkompressor wird allgemein auch Druckluftverdichter genannt werden.

Zwischen Druckluftkompressor und Luftlager können mehrere Komponenten eines Druckluftsystems zwischengeschaltet sein. So wird die vom Druckluftkompressor erzeugte Druckluft meist nicht unmittelbar über Rohrleitungen den druckluftbetriebenen Komponenten des Fahrzeugs und auch nicht dem Luftlager zugeführt, sondern zunächst in einem Druckluftbehälter zwischengespeichert und dort entnommen. Auch Ventile, Drosseln oder Druckminderer können zwischen Druckluftbehälter und den druckluftbetriebenen Komponenten angeordnet sein.

So ist weitergebildet wenigstens ein Druckminderer zwischen dem Druckluftkompressor des Hauptdruckluftsystems zur Versorgung von druckluftbetriebenen Komponenten des Fahrzeugs mit Druckluft und dem Luftlager vorgesehen, um die vom Druckluftkompressor des Hauptdruckluftsystems zur Verfügung gestellten Druckluft auf einen vorgegebenen Druck zum Betrieb des Luftlagers einzustellen.

Die dem Luftlager zugeführte und in das Luftlager eingespeiste Druckluft weist einen, insbesondere über die Zeit im wesentlichen konstanten, vorgegebenen Druck auf, um vorgegebene Eigenschaften des Luftlagers wie Kraftaufnahme und Dämpfung zu erreichen. Der Druckminderer ist entsprechend geeignet ausgebildet, um die aus dem Hauptdruckluftsystem abgezweigte Druckluft auf einen vorgegebenen, konstanten Druck zu mindern. Eine weitere Steuerung des Drucks der dem Luftlager zugeführten Druckluft ist nicht erforderlich.

Eine alternative, bevorzugte Weiterbildung sieht vor, dass das Brennstoffzellensystem einen, gegebenenfalls von einem Hauptdruckluftsystems zur Versorgung von druckluftbetriebenen Komponenten des Fahrzeugs unabhängigen, separaten Druckluftkompressor umfasst, welcher mit dem Luftlager zur Versorgung des Luftlagers mit Druckluft geeignet ausgebildet und, beispielsweise über Rohrleitungen, mit diesem verbunden ist.

Bei dem Druckluftverdichter des Brennstoffzellensystems handelt es sich bevorzugt um einen Turboverdichter, insbesondere mit luftgelagerter Welle.

Der Druckluftverdichter des Brennstoffzellensystems ist eingerichtet zur Versorgung der Brennstoffzelle mit Druckluft. Üblicherweise wird zunächst angesaugte Umgebungsluft durch Partikelfilter und/oder chemische Filter geführt und anschließend durch einen Turboverdichter geleitet, wo die dann sogenannte Prozessluft auf einen vorgegebenen Betriebsdruck, beispielsweise 1,1 bar, komprimiert wird, um sie anschließend der Brennstoffzelle zu ihrem Betrieb zuzuführen. Hier wird ein Teil dieser komprimierten Prozessluft abgezweigt und in das oder die Luftlager geführt. Dadurch erhöht sich zwar leicht der Verbrauch an Prozessluft, doch ist dies nicht signifikant. So ist nicht mit vorzeitigen Filterwechseln zu rechnen.

Vorteil dieser Lösung ist die kompakte Bauweise.

Betrieben wird das wenigstens eine Luftlager des Brennstoffzellensystems des Fahrzeugs also indem zur Versorgung des Luftlagers Druckluft aus einem Hauptdruckluftsystems des Fahrzeugs oder aus einem Prozessluftsystem des Brennstoffzellensystems genutzt wird.

Die Erfindung lässt zahlreiche Ausführungsformen zu. Sie wird anhand der nachfolgenden Figuren näher erläutert, in denen jeweils ein Ausgestaltungsbeispiel dargestellt ist. Gleiche Elemente in den Figuren sind mit gleichen Bezugszeichen versehen.
- Fig. 1: zeigt ein Schienenfahrzeug mit Brennstoffzellensystem,
- Fig. 2: zeigt das Grundprinzip des Brennstoffzellensystems,
- Fig. 3: zeigt mehrere luftgelagerte Befeuchter,
- Fig. 4: zeigt die Luftlagerung eines Befeuchters.

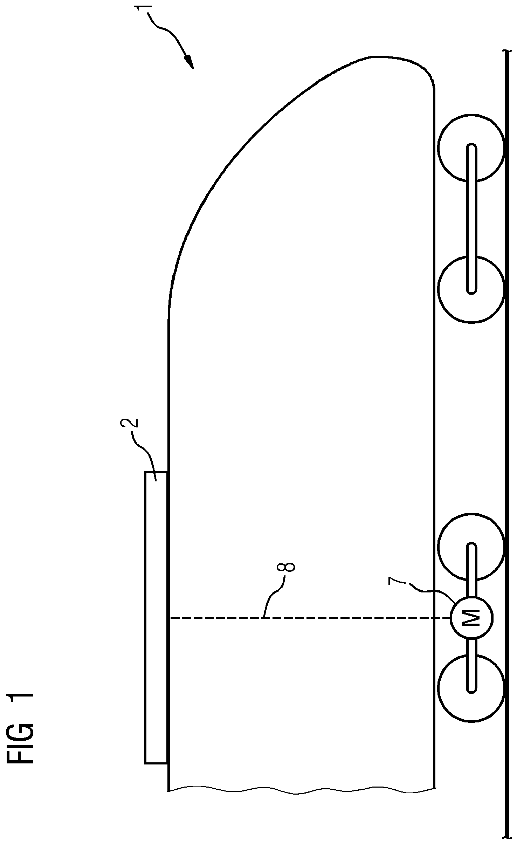

In Fig. 1 ist schematisch ein Schienenfahrzeug 1 mit elektrischem Antrieb und einem auf dem Dach des Schienenfahrzeugs angeordnetem Brennstoffzellensystem 2 zur Versorgung des elektrischen Antriebs mit Energie dargestellt. Das Brennstoffzellensystem 2 ist in einem Container angeordnet, welcher fest mit dem Dach des Schienenfahrzeugs verbunden ist. Das Brennstoffzellensystem 2 ist mit dem Antrieb 7 des Schienenfahrzeugs mit einer geeigneten Leitung 8 verbunden.

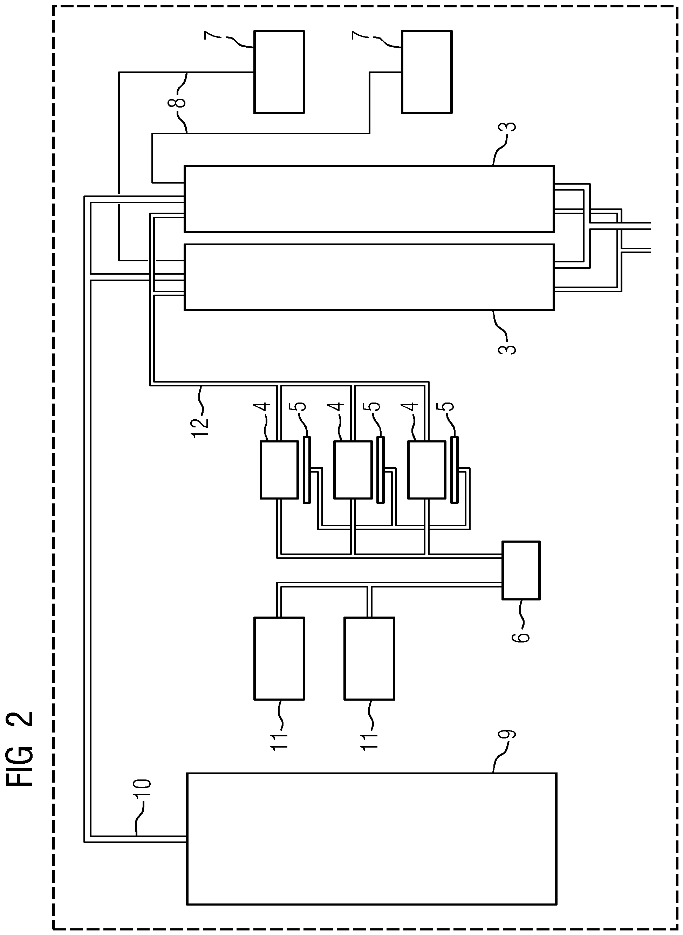

Fig. 2 veranschaulicht schematisch den Aufbau des Brennstoffzellensystems 2. Es umfasst einen Wasserstofftank 9, der über wasserstoffführende Rohrleitungen 10 mit Brennstoffzellen 3 verbunden ist. Ausgangsseitig mit den Brennstoffzellen 3 verbunden ist der elektrische Antrieb 7 des Fahrzeugs über elektrische Leitungen 8. Ebenfalls den Brennstoffzellen 3 vorgeschaltet sind Befeuchter 4 zur Befeuchtung von den Brennstoffzellen 3 zugeführter Prozessluft. Außenluft wird dabei über ein Filtersystem 11 mit Partikel- und chemischen Filtern angesaugt und als gefilterte Prozessluft mittels eines Druckluftkompressors 6, hier ein Turboverdichter, verdichtet und in den Befeuchtern 4 befeuchtet, bevor sie den Brennstoffzellen 3 über die Luftleitungen 12 zugeleitet wird. In diesem Ausführungsbeispiel sind drei Befeuchter 4 vorgesehen, die einzeln jeweils auf einem eigenen Luftlager 5 angeordnet sind.

Die Befeuchter 4 umfassen jeweils eine Membran, welche in einem Spritzgussgehäuse sitzt. Die Membran weist beispielsweise eine Fläche von 5-10 m² auf, um Druckabfall- und Wasserübertragungsanforderungen zu erfüllen.

Die Luftlager 5 dienen einer schwingungsdämpfenden Lagerung der Befeuchter 4, da ansonsten Vibrationen und Stöße aus dem Betrieb des Fahrzeugs übertragen werden könnten, die über das Befeuchtergehäuse in die Membranen geleitet würden, was zur Folge haben könnte, dass Fasern der Hohlmembranen der Befeuchter 4 brechen. Nach einer bestimmten Anzahl an gebrochenen Fasern ist ein Befeuchter 4 nicht mehr einsetzbar. Je nach Ausführung hat ein Befeuchter 4 zwischen 7000 und 9000 Fasern. Sollten nur 2% der Fasern brechen bedeutet dies bereits einen eingeschränkten Betrieb der Befeuchter. Um die technische Funktionsfähigkeit erhalten zu können, sollten die Membranen über ihre Lebenszeit bestmöglich vor mechanischem Stress geschützt werden. Dies wird über die Luftlagerung erreicht. Tauschintervalle könnte gestreckt werden indem die Nutzungsdauer der eingesetzten Membranen verlängert wird. Hierbei werden nicht nur die Kosten an zu wechselnden Befeuchtern über den Lebenszyklus von 30 Jahren eingespart, sondern auch der vorzuhaltende Ersatzteilvorrat an Befeuchtern im Lager. Gegebenenfalls kann die Nutzungsdauer verdoppelt werden. Durch diese Verbesserungsmaßnahme kann an einer der hauptkostenverursachenden Komponente des brennstoffzellenbetriebenen Fahrzeugs besonders viel in der Instandhaltung auf einmal eingespart werden.

Eine Abzweigung nach dem Druckluftkompressor im Prozessluftleitungssystem dient zur Versorgung der Luftlager 5 unter der Befeuchterbaureihe mit Druckluft. Von und zu den Befeuchtern gehen insbesondere elastisch ausgebildete Schlauchverbindungen.

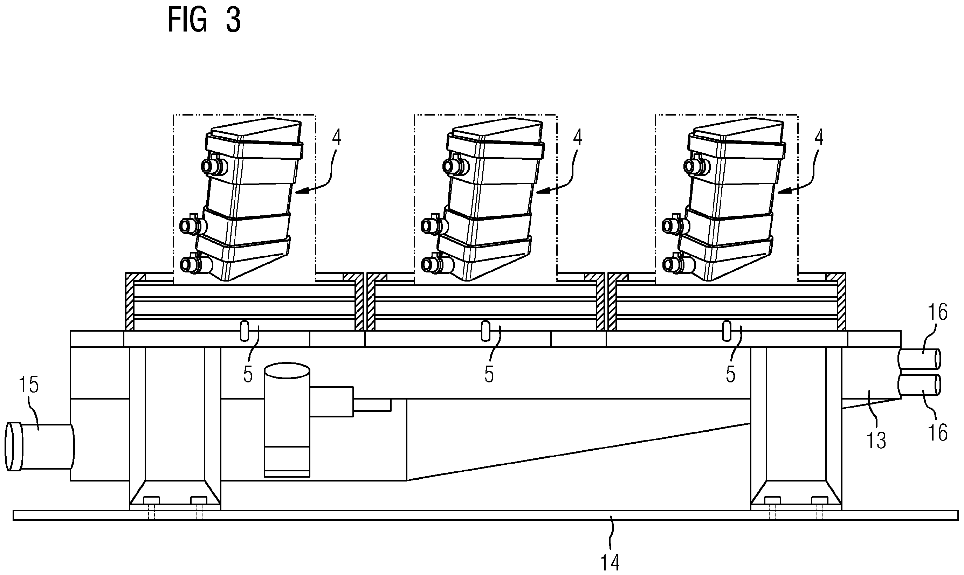

In Fig. 3 sind drei Befeuchter 4 skizziert, die jeweils einzeln auf ihnen zugeordneten Luftlagern 5 angeordnet sind. Die Luftlager 5 sind auf einem Tragrahmen 13 befestigt, welcher seinerseits mit einem Containerboden 14 verschraubt ist. Über eine Drucklufteingang 15 kann sowohl den Luftlagern 5 als auch den Befeuchtern 4 Druckluft, hier gereinigte Prozessluft, zugeführt werden. Der Tragrahmen 13 kann auch Ein-/Ausgänge 16 für Kühlmedium aufweisen.

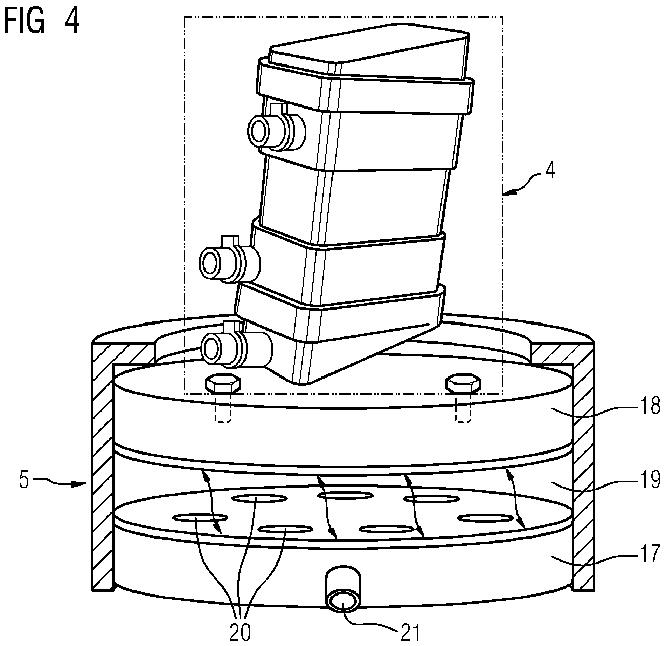

Fig. 4 lehrt nun schematisch den Aufbau eines Luftlagers 5, hier ein aerostatisches Düsenluftlager. Es umfasst eine untere, Grundplatte 17 und eine obere Befeuchterhalteplatte 18, auf welcher der Befeuchter 4 fest montiert ist. Die Grundplatte 17 und die Befeuchterhalteplatte 18 bilden zueinander bewegbare Lagerflächen des Luftlagers 5. Zwischen der Grundplatte 17 und der Befeuchterhalteplatte 18 befindet sich ein Lagerspalt 19, in welchen Druckluft zum Aufbau eines Luftdruckpolsters eingeleitet wird.

Die Druckluft strömt dabei durch Düsen 20 in der Grundplatte 17 in den Lagerspalt 19. Die Grundplatte 17 weist darüber hinaus einen Drucklufteingang 21 auf, welcher an Druckluftleitungen angeschlossen werden kann und welcher innerhalb der Grundplatte 17 mit den Düsen 20 strömungstechnisch verbunden ist.

## Patentansprüche

1. Fahrzeug (1) mit wenigstens einem Brennstoffzellensystem (2), umfassend wenigstens eine Brennstoffzelle (3) und wenigstens einen Befeuchter (4),
**dadurch gekennzeichnet,**
**dass** zumindest der wenigstens eine Befeuchter (4) über ein Luftlager (5) mit dem Fahrzeug verbunden ist.

2. Fahrzeug nach Anspruch 1,
**dadurch gekennzeichnet,**
**dass** das Luftlager (5) ein aerostatisches Düsenluftlager ist.

3. Fahrzeug nach einem der Ansprüche 1 oder 2,
**dadurch gekennzeichnet,**
**dass** das Brennstoffzellensystem (2) einen Druckluftkompressor (6) aufweist, welcher mit dem Luftlager (5) zur Versorgung des Luftlagers (5) mit Druckluft verbunden ist.

4. Fahrzeug nach einem der Ansprüche 1 oder 2,
**dadurch gekennzeichnet,**
**dass** das Fahrzeug (1) wenigstens einen Druckluftkompressor eines Hauptdruckluftsystems zur Versorgung von druckluftbetriebenen Komponenten des Fahrzeugs (1) mit Druckluft aufweist, welcher mit dem Luftlager (5) zur Versorgung des Luftlagers (5) mit Druckluft verbunden ist.

5. Fahrzeug nach einem der Ansprüche 1 bis 4,
**dadurch gekennzeichnet,**
**dass** das Brennstoffzellensystem (2), mehrere Befeuchter (4) umfasst, welche jeweils über Luftlager (5) mit dem Fahrzeug (1) verbunden sind.

6. Fahrzeug nach einem der Ansprüche 1 bis 5,
**dadurch gekennzeichnet,**
**dass** die wenigstens eine Brennstoffzelle (3) des Brennstoffzellensystems (4) des Fahrzeugs (1) wenigstens eine Polymer-Elektrolyt-Membran umfasst.

7. Fahrzeug nach Anspruch 6,
**dadurch gekennzeichnet,**
**dass** der wenigstens eine Befeuchter (4) zur Befeuchtung der Polymer-Elektrolyt-Membran der Brennstoffzelle (3) ausgebildet ist.

8. Fahrzeug nach einem der Ansprüche 1 bis 7,
**dadurch gekennzeichnet,**
**dass** der wenigstens eine Befeuchter (4) eine Fasermembran aufweist.

9. Fahrzeug nach Anspruch 8,
**dadurch gekennzeichnet,**
**dass** die Fasermembran des wenigstens einen Befeuchters (4) in einem Gehäuse des Befeuchters (4) elastisch gelagert ist.

10. Fahrzeug nach einem der Ansprüche 1 bis 9,
**dadurch gekennzeichnet,**
**dass** das Fahrzeug (1) einen elektrischen Antrieb (6) aufweist und das Brennstoffzellensystem (2) zur Versorgung des elektrischen Antriebs (6) des Fahrzeugs mit Energie ausgebildet ist.

11. Fahrzeug nach einem der Ansprüche 1 bis 10,
**dadurch gekennzeichnet,**
**dass** das Fahrzeug (1) ein Schienenfahrzeug ist.

12. Verfahren zum Betreiben eines Fahrzeugs nach einem der Ansprüche 1 bis 11,
**dadurch gekennzeichnet,**
**dass** zur Versorgung des Luftlagers (4) Druckluft aus einem Hauptdruckluftsystems des Fahrzeugs (1) oder Druckluft aus einem Prozessluftsystem des Brennstoffzellensystems (2) genutzt wird.
